(19) Europäisches Patentamt
European Patent Office
Office européen des brevets

(11) Publication number: 0 413 030 A1

## (12) EUROPEAN PATENT APPLICATION
### published in accordance with Art. 158(3) EPC

(21) Application number: 90901898.8

(22) Date of filing: 17.01.90

(86) International application number:
PCT/JP90/00044

(87) International publication number:
WO 90/08987 (09.08.90 90/19)

(51) Int. Cl.5: G05B 13/02

(30) Priority: 30.01.89 JP 17713/89

(43) Date of publication of application:
20.02.91 Bulletin 91/08

(84) Designated Contracting States:
DE FR GB

(71) Applicant: FANUC LTD.
3580, Shibokusa Aza-Komanba, Oshino-mura
Minamitsuru-gun, Yamanashi 401-05(JP)

(72) Inventor: TORII, Nobutoshi Room 308
Fuyohaitsu
65-4, Takakura-cho Hachioji-shi
Tokyo 192(JP)
Inventor: NIHEI, Ryo Room 7-201, Fanuc
Manshonharimomi
3539-1, Shibokusa Oshino-mura
Minamitsuru-gun
Yamanashi 401-05(JP)
Inventor: KATO, Tetsuaki Room 8-101, Fanuc
Manshonharimomi
3511-1, Shibokusa Oshino-mura
Minamitsuru-gun
Yamanashi 401-05(JP)

(74) Representative: Billington, Lawrence Emlyn et al
HASELTINE LAKE & CO Hazlitt House 28
Southampton Buildings Chancery Lane
London WC2A 1AT(GB)

(54) SERVO CONTROL METHOD BY THE DISTURBANCE ESTIMATION OBSERVER.

(57) A servo control method which, even in the case of a machine having a large variation in inertia, makes it possible to properly estimate and remove disturbance by the disturbance estimation observer so that the machine exhibits improved immunity against disturbance. An estimated disturbance (x) is found based on the actual instruction (I-y') and the actual motor speed (v) by a disturbance estimation observer(5) equipped with four transfer elements (51 to 54) that have transfer functions (Kt/Jm,K1,K2/S,1/S)determined by values corresponding to torque constant(Kt), inertia(Jm) and parameters(K1, K2). The gain is adjusted by the transfer element(3) and high-frequency components are removed by the filter (4), whereby a corrected estimation disturbance (y') is found. A servo motor is driven by the actual instruction current obtained by subtracting a corrected estimation disturbance from the instruction current (I), so that the effect of disturbance is removed. The parameter (jm) of transfer functions (3,51) is variably set depending upon a change in the inertia of the machine that stems from a change in the operation condition of the machine, and disturbance is properly estimated and is removed even when the inertia varies to a greater extent.

# FIG.1

# SERVO CONTROL METHOD USING A DISTURBANCE ESTIMATION OBSERVER

## Technical Field

The present invention relates to a servo control method permitting an improvement in the disturbance resistance of various machines, and more particularly, to a servo control method in which various disturbances over a wide frequency zone can be properly estimated even in those machines which are subject to substantial fluctuations in inertia.

## Background Art

Various low-rigidity machines, including robots of a cantilever structure, are poor in vibration-damping properties in a low-frequency band, and are susceptible to low-frequency disturbances. Conventionally, therefore, a servo system including an integrator is mounted on the machine and is used to effect proportional-plus-integral control, thereby increasing the rigidity of the whole machine including the servo system, so that production of vibration is prevented, and the resistance to disturbance is improved. However, the servo system furnished with the integrator is poor in responsiveness, and is susceptible to periodic disturbances.

According to a known method, moreover, a disturbance is estimated by means of a disturbance estimation observer, and disturbance removal (zeroing) is effected by means of an estimated disturbance. A disturbance estimation value obtained by means of the disturbance estimation observer never entails a phase rotation in a low-frequency zone, that is, a servo system furnished with the disturbance estimation observer is resistant to periodic disturbances. If the disturbance estimation observer is mounted on a machine, e.g., a robot, which is subject to substantial fluctuations in inertia, however, the value of a parameter fixedly set in association with the inertia in a disturbance estimation model of the disturbance estimation observer is liable to be incongruous with the inertia of the machine, so that the disturbance sometimes cannot be properly estimated. Further, the disturbance estimation observer is liable to entail a phase lag (phase rotation) in a high-frequency zone.

## Disclosure of the Invention

An object of the present invention is to provide a servo control method in which disturbance estimation by means of a disturbance estimation observer can be properly effected even in various machines including those machines with substantial fluctuations in inertia, so that the disturbance resistance of the various machines can be improved.

Another object of the present invention is to provide a servo control method in which a phase rotation of a disturbance estimation value obtained by means of a disturbance estimation observer can be prevented within a wide frequency band, especially a high-frequency band, so that disturbances in various frequency bands can be properly estimated, whereby disturbance removal can be effected for certain.

In order to achieve the above objects, according to the present invention, there is provided a servo control method using a disturbance estimation observer, the servo control method comprising steps of: (a) periodically determining the inertia of a machine furnished with a servo system which changes depending on the operating state of the machine; (b) estimating a disturbance, added to the machine, in accordance with the inertia thus determined and using the disturbance estimation observer, to determine an estimated disturbance; and (c) removing the estimated disturbance in the servo system.

Preferably, a corrected estimated disturbance is determined by removing a high-frequency component of the estimated disturbance in the step (b), and the corrected estimated disturbance is removed in the servo system in the step (c).

According to the present invention, as described above, the disturbance added to the machine is estimated and removed by means of the disturbance estimation observer, so that the rigidity of the whole machine, including the servo system, increases, and also, the phase of a disturbance estimation value does not rotate within a low-frequency band. As a result, the machine is improved in resistance to periodic disturbances. Further, the inertia of the machine furnished with the servo system, which changes depending on the operating state of the machine, is periodically determined, and the disturbance is estimated in accordance with the inertia thus determined. Accordingly, a parameter associated with the inertia in a disturbance estimation model of the disturbance estimation observer can be variably adjusted so that the parameter is always in conformity with the inertia of the machine, and the disturbance estimation can be properly effected. Since the corrected estimated disturbance determined by removing the high-frequency component of the estimated disturbance is removed, furthermore, a phase rotation of the disturbance estimation value can be prevented within a wide frequency band including a high-frequency band, so that the disturbance estimation is rationalized.

Brief Description of the Drawings

Fig. 1 is a block diagram of a servo system showing the principle of operation of the present invention;
Fig. 2 is a schematic block diagram showing the principal part of a robot to which is applied a servo control method according to one embodiment of the present invention; and
Fig. 3 is a flow chart showing disturbance estimation and removal processes executed by a digital processor of a digital servo circuit shown in Fig. 2.

Best Mode of Carrying Out the Invention

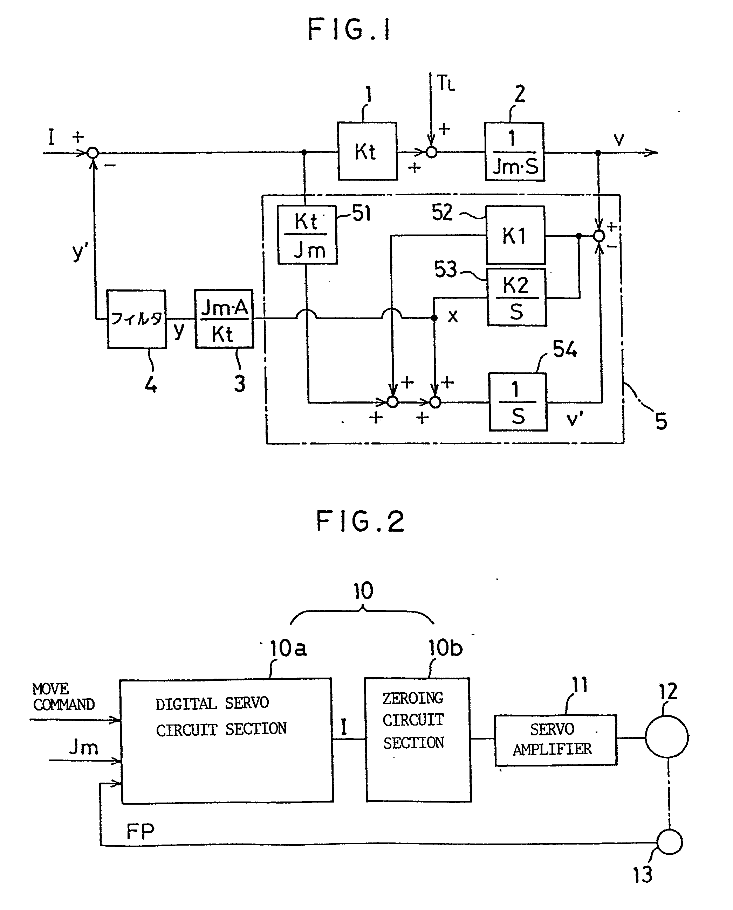

The following is a description of the principle of servo control according to the present invention.
In general, a servomotor (not shown) mounted in a machine (hereinafter referred to as robot) of any type including a robot (not shown) is subjected to various disturbances, such as static friction adding to the robot when an operating section (hereinafter referred to as robot) of the robot starts to move, dynamic friction acting while the robot is moving, and influence of gravity varying depending on the moving direction of the robot.
The present invention is intended to estimate and remove the various disturbances by means of a disturbance estimation observer, and also to estimate and remove the disturbances if the inertia of the robot changes due to an operation to release a workpiece seized by means of a robot hand, or the like.
Referring to the block diagram of Fig. 1, according to the present invention, an actual current command (I - y') obtained by subtracting a corrected estimated disturbance y' (mentioned later) from a current command (torque command) I delivered from a servo circuit (not shown) is converted into an actual motor speed v by means of transmission elements 1 and 2 associated with the servomotor (not shown). In Fig. 1, symbols Kt and Jm are the torque constant of the servomotor and the total inertia of the robot, respectively, and TL is a disturbance torque.
A disturbance estimation observer 5 includes transmission elements 51 to 54 whose transfer functions are Kt/Jm, K1, K2 and 1/5, respectively, and is constructed so as to be in conformity with robot operation conditions based on the following equations (1) and (2).

$$dTL/dt = 0 \qquad\qquad --- (1)$$

$$dv/dt = (I \cdot Kt/Jm) + (TL/Jm) \qquad\qquad --- (2)$$

In this disturbance estimation observer 5, the sum of an output from the transmission element 51 which receives the actual current command (I - y'), an output of the transmission element 52, and an output x of the transmission element 53 is input to the transmission element 54. Also, the result of subtraction of an output (estimated motor speed) v' of the transmission element 54 from the actual motor speed v is input to each of the transmission elements 52 and 53.
According to the present invention, moreover, an output (estimated disturbance) y from a transmission element 3, which receives the output x of the transmission element 53 of the disturbance estimation observer 5 and is implemented to adjust a feedback gain, is input to a filter 4, so that a high-frequency component of the estimated disturbance y is removed. In Fig. 1, symbol y' indicates the corrected estimated disturbance delivered from the filter 4, and symbol A indicates the feedback gain.
As seen from the block diagram of Fig. 1, the actual motor speed v and the estimated motor speed v' are given, respectively, by the following equations (3) and (4).

$$v = \{(I - y') \cdot Kt + TL\} \cdot (1/Jm \cdot S) \qquad \text{---} \quad (3)$$

$$v' = \{(I - y') \cdot (Kt/Jm) + (v - v') \cdot K1$$
$$+ (v - v') \cdot (K2/S)\} \cdot (1/S) \qquad \text{---} \quad (4)$$

From equations (3) and (4), we obtain equation (5) as follows:

$$v - v' = (TL/Jm) \cdot [1/\{S + K1 + (K2/S)\}] \quad \text{---} \quad (5)$$

Accordingly, the output $x$ of the transmission element 53 is given by the following equation (6).

$$x = (v - v') \cdot (K2/S)$$
$$= (TL/Jm) \cdot [K2/\{S^2 + K1 \cdot S + K2\}] \qquad \text{---} \quad (6)$$

Here if the values of transfer function parameters K1 and K2 are selected so that the poles are stabilized, the output (estimated disturbance before gain adjustment) x of the transmission element 53 takes a value proportional to the disturbance torque TL, as is given by the following equation (7).

$$x \fallingdotseq TL/Jm = TL'/Jm \qquad \text{---} \quad (7)$$

In this case, the output (estimated disturbance after gain adjustment) y of the transmission element 3 and an output Kt• (I - y') of the transmission element 1 are given by the following equations (8) and (9), respectively.

$$y = x \cdot Jm \cdot A/Kt = TL' \cdot A/Kt \qquad \text{---} \quad (8)$$

$$Kt \cdot (I - y') = Kt \cdot (I - TL' \cdot A/Kt)$$
$$= Kt \cdot I - IL' \cdot A \qquad \text{---} \quad (9)$$

where symbol A indicates the feedback gain.

After all, the sum of the output Kt• (I - y') of the transmission element 1 and the disturbance torque TL takes a value approximate to the value Kt•I. Thus, the disturbance is removed.

According to the present invention, furthermore, the transfer function parameter Jm of the transmission elements 3 and 51 is variably adjusted depending on changes of the total inertia Jm of the robot, attributable to changes of the operating state of the robot. By this gain scheduling, a disturbance estimation model of the disturbance estimation observer 5 is always kept in conformity with the operating state of the robot, and the estimation and removal of disturbance can be properly effected even for those robots which are subject to substantial fluctuations in inertia.

Referring now to Fig. 2, the robot for effecting a servo control method according to one embodiment of the present invention will be described.

The robot has a servo control device, including a digital servo circuit 10 and a servo amplifier 11, and a servomotor 12 furnished with a pulse coder 13.

The digital servo circuit 10, which includes a digital signal processor (not shown), has the conventional function to control the position, speed, and torque (position, speed, and torque control functions of the digital servo circuit 10 are designated as a servo circuit section 10a in the function block diagram of Fig. 2). More specifically, in the servo circuit section 10a, a position deviation is obtained in accordance with a move command from a main processor, contained in a numerical control device (not shown) for controlling the robot, and a feedback pulse FP from the pulse coder 13, and a deviation between a velocity command calculated according to the position deviation and an actual motor speed obtained in accordance with the frequency of the feedback pulse FP is obtained. Further, a torque command (current command) corresponding to this velocity deviation and designated by symbol I in Figs. 1 and 2 is calculated.

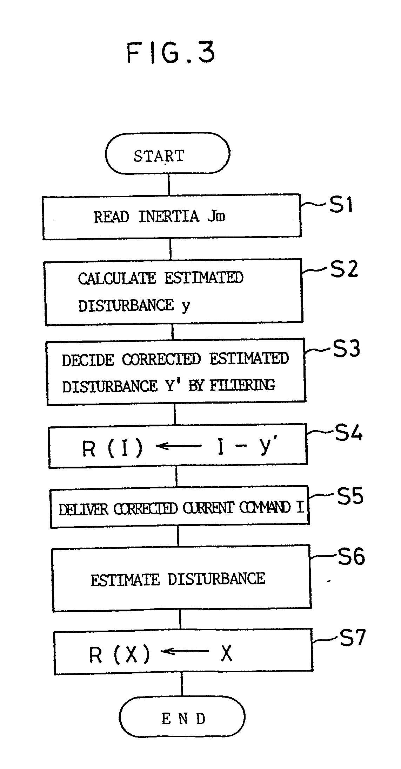

The digital servo circuit 10 has the functions of the disturbance estimation observer 5, the transmission element 3 for feedback gain adjustment, and the filter 4 of Fig. 1 (disturbance estimation, gain adjustment, and filtering functions of the servo circuit 10 are designated as a zeroing circuit section 10b in Fig. 2). More specifically, the servo circuit 10, which operates as the zeroing circuit section 10b, calculates the total inertia Jm acting on the robot in accordance with the operating state of the robot, stores this calculated inertia Jm in a shared memory (not shown) contained in the servo circuit 10, and further executes the processes for disturbance estimation and removal of Fig. 3 in accordance with the inertia Jm thus calculated and stored.

The following is a description of the operation of the robot with the aforementioned construction.

When the digital servo circuit 10 operates as the zeroing circuit section 10b, the digital signal processor of the servo circuit 10 periodically executes the processes for disturbance estimation and removal of Fig. 3.

Thus, in each of cycles of disturbance estimation and removal processes, the processor reads out a value stored in the shared memory and indicative of the present total inertia Jm of the robot from the shared memory (Step S1). Then, the processor reads out the value corresponding to the output (estimated disturbance before gain adjustment) x of the transmission element 53 of Fig. 1, calculated and stored in a built-in register R(x) in the last processing cycle, from this register, and performs the operation indicated by the aforesaid equation (8) on the basis of this value x (Step 52). More specifically, as in the feedback gain adjustment by means of the transmission element 3 of Fig. 1, a value corresponding to the output (estimated disturbance after gain adjustment) y of the transmission element 3 is calculated by dividing the product of the stored value x in the register R(x), present inertia Jm, and feedback gain A by the torque constant Kt. As a result, the calculated estimated disturbance y is in conformity with the robot inertia which depends on the present operating state of the robot. In other words, a parameter suited for the robot inertia is used in the disturbance estimation model of the disturbance estimation observer, so that the disturbance estimation can be properly effected even for those robots which are subject to substantial fluctuations in inertia.

Then, the processor executes low-pass filtering for the estimated disturbance y after gain adjustment, thereby removing the high-frequency component contained in the estimated disturbance y , and obtains the corrected estimated disturbance corresponding to the output y' of the filter 4 of Fig. 1 (Step S3). As a result, a drawback of the disturbance estimation observer such that a phase rotation of the disturbance estimation value is caused in a high-frequency band is eliminated, so that the disturbance estimation is rationalized.

Further, the processor calculates a corrected current command I (= I - y') by subtracting the corrected estimated disturbance y' from the current command I obtained when the servo circuit 10 operates as the servo circuit section 10a, and stores this calculated value in a register R(I) and delivers it to the servo amplifier 11 (Steps S4 and S5). As a result, an influence of the disturbance on the current command added to the servo amplifier 11 is removed.

Subsequently, in order to obtain the estimated disturbance x before gain adjustment used in the next cycle of disturbance estimation and removal processes, processing similar to the disturbance estimation processing by means of the disturbance estimation observer 5 of Fig. 1 is performed (Step S6). More specifically, the processor calculates the value corresponding to the output (estimated disturbance before gain adjustment) x of the transmission element 53 of Fig. 1 in accordance with the present actual motor speed v obtained in the servo circuit section 10a and the estimated speed v' obtained in the preceding cycle of disturbance estimation and removal processes.

In Step S6, moreover, the processor calculates the estimated speed v' used in the next processing cycle. Namely, the processor calculates a value corresponding to the output of the transmission element 51 of Fig. 1 in accordance with the stored value (I - y') in the register R(I), calculates a value corresponding to the output of the transmission element 52 of Fig. 1 in accordance with the present actual motor speed v and the estimated speed v' obtained in the preceding processing cycle, and further calculates the estimated speed v' corresponding to the output of the transmission element 54 of Fig. 1 in accordance with the above two calculated values and the aforesaid estimated disturbance x . The estimated disturbance x and the estimated speed v', individually calculated in this manner, are stored in the register R(x) and a register R-(v'), respectively (Step S7), whereupon the disturbance estimation and removal processes of Fig. 3 for the present cycle are finished.

The present invention is not limited to the embodiment described above, and various changes may be effected therein. Although the present invention is applied to the robot in the above descriptions of the principle of operation of the present invention and the above embodiment, the present invention may be also applied to various other machines than the robot. Although the present invention is effected by means of the digital servo circuit in the above embodiment, moreover, servo circuits of any other types may be used instead.

## Claims

1. A servo control method using a disturbance estimation observer, comprising steps of:
   (a) periodically determining inertia of a machine furnished with a servo system which changes depending on an operating state of the machine;
   (b) estimating a disturbance, added to said machine, in accordance with the inertia thus determined and using the disturbance estimation observer, to determine an estimated disturbance; and
   (c) for removing said estimated disturbance in said servo system.

2. A servo control method using a disturbance estimation observer according to claim 1, wherein a corrected estimated disturbance is determined by removing a high-frequency component of said estimated disturbance in said step (b), and said corrected estimated disturbance is removed in said servo system in said step (c).

3. A servo control method using a disturbance estimation observer according to claim 1, wherein said machine includes a servomotor adapted to be driven in response to a current command from said servo system, and said estimated disturbance is removed from said current command in said step (c).

4. A servo control method using a disturbance estimation observer according to claim 2, wherein said machine includes a servomotor adapted to be driven in response to a current command from said servo system, and said corrected estimated disturbance is removed from said current command in said step (c).

# FIG.1

# FIG.2

# FIG.3

START

READ INERTIA Jm —S1

CALCULATE ESTIMATED DISTURBANCE y —S2

DECIDE CORRECTED ESTIMATED DISTURBANCE Y' BY FILTERING —S3

$R(I) \longleftarrow I - y'$ —S4

DELIVER CORRECTED CURRENT COMMAND I —S5

ESTIMATE DISTURBANCE —S6

$R(X) \longleftarrow X$ —S7

END

# INTERNATIONAL SEARCH REPORT

International Application No PCT/JP90/00044

## I. CLASSIFICATION OF SUBJECT MATTER (if several classification symbols apply, indicate all) °

According to International Patent Classification (IPC) or to both National Classification and IPC

Int. Cl$^5$    G05B13/02

## II. FIELDS SEARCHED

Minimum Documentation Searched ?

| Classification System I | Classification Symbols |
|---|---|
| IPC | G05B13/00 - 13/04, G05B19/407, G05D3/12 |

Documentation Searched other than Minimum Documentation
to the Extent that such Documents are Included in the Fields Searched ⁴

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | JP, A, 60-160404 (Yasukawa Electric Mfg. Co., Ltd.), 22 August 1985 (22. 08. 85) (Family: none) | 1 - 4 |
| A | JP, A, 61-244286 (Yasukawa Electric Mfg. Co., Ltd.), 30 October 1986 (30. 10. 86) (Family: none) | 1 - 4 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 11, 1990 (11. 04. 90) | April 23, 1990 (23. 04. 90) |

| International Searching Authority | Signature of Authorized Officer |
|---|---|
| Japanese Patent Office | |

Form PCT ISA 210 (second sheet) (January 1985)